(19) Europäisches Patentamt / European Patent Office / Office européen des brevets

(11) **EP 3 979 146 A1**

(12) **EUROPEAN PATENT APPLICATION**

(43) Date of publication:
**06.04.2022 Bulletin 2022/14**

(51) International Patent Classification (IPC):
**G06N 5/02** (2006.01)    **G06N 20/00** (2019.01)

(21) Application number: **20199308.6**

(52) Cooperative Patent Classification (CPC):
**G06N 5/022; G06N 20/00**

(22) Date of filing: **30.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Levinkov, Evgeny**
  **70176 Stuttgart (DE)**
• **Gad-Elrab, Mohamed**
  **66111 Saarbruecken (DE)**
• **Stepanova, Daria**
  **71272 Renningen (DE)**
• **Tran, Trung Kien**
  **89073 Ulm (DE)**

(54) **DEVICE AND COMPUTER IMPLEMENTED METHOD FOR CONCEPTUAL CLUSTERING**

(57)    Device and computer implemented method, the method comprising determining (1) an embedding (206) of a first entity (204), in particular of a knowledge graph (202), inserting (2) a first vertex (210) for the embedding (206) in an in particular weighted in particular undirected graph (208), determining (3) in the graph (208) a first cluster (216) of vertices comprising the first vertex (210), determining (4) for the first cluster (216) a second entity (222), in particular in the knowledge graph (202), determining (4) a semantic similarity (224) between the first entity (204) and the second entity (222), in particular in the knowledge graph (202), determining (5) a rule (226) for the first cluster (216) depending on the semantic similarity (224) between the first entity (204) and the second entity (222).

Fig. 2

EP 3 979 146 A1

**Description**

Background

The invention concerns conceptual clustering.
The task of conceptual clustering over relational data is described for example in R. E. Stepp and R. S. Michalski. Conceptual clustering of structured objects: A goal-oriented approach. Artificial Intelligence, 28(1):43-69 (1986).

Disclosure of the invention

The invention provides a computer implemented method for solving the conceptual clustering problem over relational data, a corresponding device and a corresponding computer program.
The computer implemented method comprises determining an embedding of a first entity, in particular of a knowledge graph, inserting a first vertex for the embedding in an in particular weighted in particular undirected graph, determining in the graph a first cluster of vertices comprising the first vertex, determining for the first cluster a second entity, in particular in the knowledge graph, determining a semantic similarity between the first entity and the second entity, in particular in the knowledge graph, determining a rule for the first cluster depending on a semantic similarity between the first entity and the second entity. This way, the conceptual clustering task is performed over entities of a Knowledge Graph, KG, where given a KG and a set of target entities, the goal is to cluster these entities into an, in particular unknown, number of distinct groups based on the quality of the descriptions computed over the KG for the groups. The rule provides description for the computed cluster that is understandable for a human and a machine alike. The method has the capability of computing high-quality clusters along with their descriptions without knowing their number a priori. Moreover, in contrast to other existing clustering methods, e.g. DBSCAN, that do not require the number of clusters as input, this method is especially appealing due to a small number of hyper-parameters to tune.
Inserting the first vertex in the graph may comprise labelling an edge of the graph that links the first vertex to a second vertex of the graph with a label. Relying on the target entities an in particular undirected complete weighted graph is constructed, where the edges between every pair of entities are labeled.
Labelling the edge may comprise determining a weight depending on a distance between a first vector for the first vertex and a second vector for the second vertex and mapping the weight to the label with a function. The edges between every pair of entities are labeled using e.g. a cosine similarity between the respective entities in an embedding space.
Determining the first cluster may comprise determining a subset of edges of the graph for the first cluster including the first vertex, such that no cycle in the graph intersects this subset once. A multicut problem is formulated based on this graph, and solved effectively.
Determining the embedding may comprise mapping the first entity to a first vector in a vector space with a model. The model may be an embedding model that translates entities and relations of the KG into vectors in a vector space in particular a low dimensional vector space.
Determining the rule may comprise determining a plurality of rules depending on semantic similarities to the second entity and selecting the rule from the plurality of rules.
Selecting the rule may comprise determining an amount of entities covered by the rule that belong to the first cluster, determining an amount of entities covered by the rule that belong to a second cluster, determining a measure for the rule depending on the amount of entities covered by the rule that belong to the first cluster and depending on the amount of entities that belong to the second cluster, and selecting the rule if the measure meets a condition or not selecting the rule otherwise.
Determining the measure may comprise determining a ratio of the amount of entities covered by the rule that belong to the first cluster and a cardinality of the first cluster.
Determining the measure may comprise determining a ratio of the amount of entities covered by the rule that belong to the second cluster and a cardinality of the second cluster.
The method may comprise determining an output depending on the rule, detecting an input for the rule, and determining a label for the rule depending on the input. The rule describes a concept that is found in the KG. An expert may be provided with such a description and suggest a name for it. Such concept can then be added to the KG under the suggested name.
The method may comprise receiving an input, in particular a query or a message, selecting the rule depending on the input, determining at least one entity depending on the rule, outputting a response depending on the at least one entity.
Outputting the response may comprise indicating a state of a machine, a property of an object in a digital image or an answer to a question depending on the at least one entity.
The device is adapted to execute the method. The computer program comprises computer readable instructions

that, when executed on a computer, cause the computer to execute steps in the method.

Further advantageous embodiments are derivable from the following description and the drawing. In the drawing

Fig. 1 schematically depicts aspects of a device for solving the conceptual clustering problem over relational data,

Fig. 2 schematically depicts steps in a method for solving the conceptual clustering problem over relational data,

Fig. 3 schematically depicts aspect of an application.

Knowledge graphs, KGs, represent interlinked collections of factual information, and they are often encoded as a set of <subject predicate object> triples, e.g., <john worksAt Firm A>. Subjects or objects of such triples are referred to as entities. Predicates are referred to as relations. The set of triples of a KG can be naturally represented as a directed graph, whose vertices and edges are labeled.

Knowledge graph embedding, KGE, concerns embedding KG entities and relations into continuous vector spaces with a user-specified dimension n. More specifically, KGE models take as input a set of KG triples and aim at mapping the entities and relations into the n-dimensional vector space such that some features reflecting the KG structure are preserved. These features are captured by the objective function of the respective embedding model. This way from relational data, a set of numerical vectors is obtained.

Conceptual clustering is a task of grouping entities in a knowledge graph into a set of groups with the high inter-cluster similarity and low intra-cluster similarity as well as describing the commonalities for entities within each cluster in terms of their KG properties.

A multicut of a graph is a subset of its edges such that no cycle in the graph intersects this subset exactly once.

Rule induction is the task of learning rules from a KG, i.e., given a KG, the goal of rule learning is to construct a set of rules of the form $H \leftarrow B$, where $H$ is the entailed predicate of the form $h(X,c)$, where $c$ is a dummy constant corresponding to the target cluster, h is a dummy predicate reflecting the relation between X and the target cluster, and $B$ is a conjunction of predicates of the form $b_1(X_1,Y_1),b_2(X_2,Y_2),...,b_n(X_n,Y_n)$, where every $X_1,X_2,...,X_n,Y_1,Y_2,...,Y_n$ can either be a variable or a constant, such that the learned rules hold often enough in the data.

A measure for a rule is a function that takes as input a KG and a rule and outputs a value reflecting how well the given rule fits the KG.

Conjunctive query, CQ, is an expression of the form $q(X_1,X_2,...,X_k) \leftarrow B$ or sometimes simply written as $\langle X_1, X_2,...,X_k \rangle \leftarrow B$, where $B$ is the body of the CQ similar as defined for rules, and $X_1,X_2,...,X_k$ are so-called answer variables, i.e., variables, whose positions are responsible for answers to the query.

Users formulate their information needs in the form of such queries. For example, for a KG storing in Firm A employees, a possible conjunctive query could ask for all people, who work for Department D of Firm A, are married and have a child. Formally, such query could be written as

$Q(X) \leftarrow$ type(X,person), *worksFor(X,D), marriedTo(X,Y), hasChild(X,Z).*

In the above example X is an answer variable of the given CQ. Conjunctive queries can be naturally represented as KG patterns.

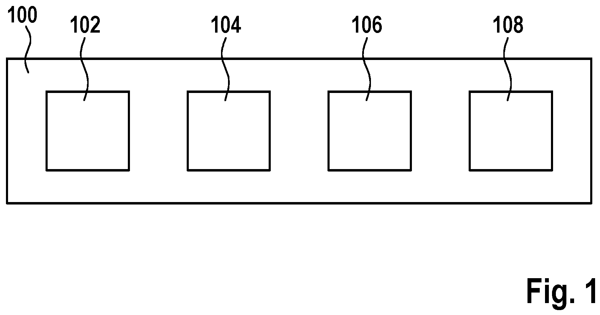

Figure 1 depicts a device 100 comprising at least one processor 102 and at least one storage 104 for storing instructions and other data. The device 100 may comprise an input 106 and an output 108. The input 106 may be a receiver for messages or a user interface for detecting queries of a user. The output 108 may be a display.

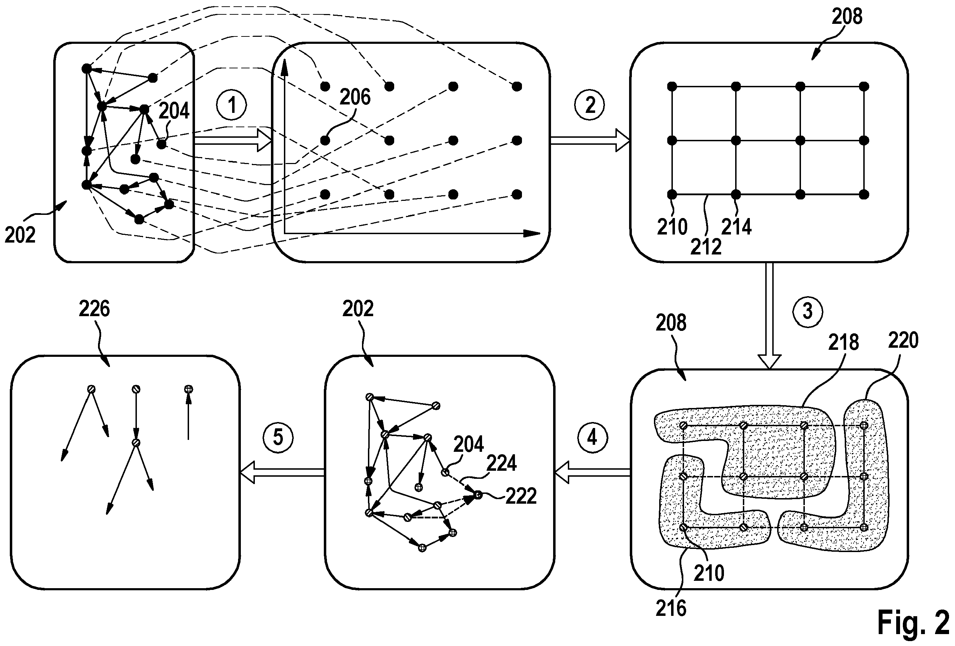

The device 100 is adapted for executing a method that described below with reference to figure 2. As an example for relational data, the method will be described for a Knowledge Graph, KG, 202 that comprises a plurality of entities. The principles of the method are explained below for a first entity 204 of the plurality of entities. The method may be applied to any of the entities of the KG 202. The method may be applied to target entities, e.g. a part of the KG 202 as well.

The method for conceptual clustering described below does not require the information about the number of clusters.

The method takes as input a knowledge graph KG, a set of entities T, as well as other parameters including a maximum length of cluster descriptions m, a minimum coverage $\mu$ and a threshold value $\theta$, which are used to determine a quality of the computed descriptions.

The method comprises a step 1 of determining an embedding for at least one entity of the KG 202. The embedding may be a vector in a vector space. The embedding may be determined with a model, in particular an embedding model. Figure 2 exemplary depicts an embedding 206 of the first entity 204. The embedding 206 of the first entity 204 may be a first vector.

A corresponding algorithm may start by embedding the entities and relations into a low dimensional vector space using a certain embedding model. Any embedding model can be used. An exemplary embedding model is describe in Ren, H., Hu, W., Leskovec, J.: Query2box: Reasoning over knowledge graphs in vector space using box embeddings. In: ICLR (2020).

The method comprises a step 2 of determining a graph 208. In the example, the graph 208 is determined for the embeddings of the entities of the KG 202. The step 2 comprises inserting a first vertex 210 for the embedding 206 in the graph 208. When the target entities, i.e. a subset of the entities of the KG 202, are used, the graph 208 is incomplete in the sense that there are less vertices than entities. This means, the construction of the graph 208 for the entire KG 200 can be avoided in practice.

The graph 208 in the example is a weighted undirected graph.

The step 2 comprises determining labels for edges of the graph 208. In the example, inserting the first vertex 210 in the graph 208 comprises labelling an edge 212 of the graph that links the first vertex 210 to a second vertex 214 of the graph 208 with a label.

Labelling the edge 212 may comprise determining a weight depending on a distance [cosine similarity] between the first vector for the first vertex 210 and a second vector for the second vertex 214 and mapping the weight to the label with a function.

In the example, the graph 210 is a similarity graph that can be used as input to a multicut algorithm. Once the entities and relations are mapped to the embedding space, a complete undirected weighted graph $G = (V, E)$ may be computed. In this example, $E = T,$ and every pair of entities in $E$ are connected. Then the method computes pairwise distances between every pair of entities using the cosine similarity of their vectors.

More specifically, let $a, b$ be two target entities, and let $v_a, v_b$ be their respective numerical vectors in the embedding space. Then the distance between $a$ and $b$ is computed using the cosine similarity function as follows:

$$dist(a, b) = \left(1 - \frac{v_a * v_b}{\|v_a\| \|v_b\|}\right)/2$$

Every edge $(a, b) \in E$ in the constructed complete graph $G$ is then labeled with the function $\Phi\colon E \to R$

$$\Phi(a. b) = log\left(\frac{dist(a, b)}{1 - dist(a, b)}\right)$$

The method comprises a step 3 of determining in the graph 208 at least one cluster. Preferably, the step 3 comprises determining at least two clusters in the graph 208. In the example a first cluster 216 of vertices comprising the first vertex 210 is determined. In the example, a second cluster 218 and a third cluster 220 are determined as well.

Determining the first cluster 216 may comprise determining a subset of edges of the graph 208 for the first cluster 216 including the first vertex 210, such that no cycle in the graph 208 intersects this subset once.

The multicut clustering algorithm may be used to detect prominent regions in the embedding space. Aspects of the multicut clustering approach are disclosed in Chopra, S., Rao, M.: The partition problem. Math. Prog. 59(1-3), 87-115 (1993).

A multicut of the graph 210 is a subset of its edges, such that no cycle in the graph intersects this subset exactly once. Assigning 1 to the edges in the multicut, and 0 to all other edges, a set of all valid multicuts can be formalized by the following set of linear inequalities:

$$Y_G = \{y\colon E \to \{0,1\} | \forall T \in cycles(G), \forall e \in T\colon y_e \leq \sum_{f \in T_e} y_f\}$$

Considering only chordless cycles is sufficient in this example. Any valid multicut $y \in Y_G$ uniquely defines a graph decomposition.

Given the above definitions, a minimum cost multicut problem is as follows:

$$min_{y \in Y_G} \sum_{e \in E} (\Phi_e + \beta) * y_e$$

This problem is solvable using effective heuristics methods based on local search strategies e.g. as disclosed in Keuper, M., Levinkov, E., Bonneel, N., Lavoue, G., Brox, T., Andres, B.: Efficient decomposition of image and mesh graphs by lifted multicuts. In: ICCV (2015).

The method comprises a step 4 of determining for the first cluster 216 a second entity 222. The step 4 comprises determining a semantic similarity 224 between the first entity 204 and the second entity 222. The second entity 222 and the semantic similarity 224 are determined in the knowledge graph 202.

The method comprises a step 5 of determining a rule 226 for the first cluster 216 depending on a semantic similarity between the first entity 204 and the second entity 222.

Determining the rule 226 may comprise determining a plurality of rules depending on semantic similarities to the second entity and selecting the rule 226 from the plurality of rules.

The constructed regions, i.e., clusters, in the vector space may be mapped to conjunctive queries, i.e., descriptions, by learning Horn rules. More specifically, for every entity *a* that has been clustered into a cluster *c* in the step 3, the method may add a fact *belongsTo(a, c)* to the KG and learn rules of the form

$belongsTo(X,c) \leftarrow p_1(X,Y),p_2(Y,Z),...,p_m(W,U)$

where m is the desired description length specified by the user as mentioned above, while $p_1,p_2,...,p_m$ are relations appearing in the KG. This means that the entity *a* is covered by the rule.

An exemplary algorithm that may be used for learning such rules is disclosed in Galarraga, L., Teflioudi, C., Hose, K., Suchanek, F.M.: Fast rule mining in ontological knowledge bases with amie++. The VLDB Journal 24(6), 707-730 (2015).

The method described therein is modified as described below to be capable of capturing constants in rule heads. More specifically in an exemplary implementation the rule is modified to start from *belongsTo(X,c)* rather than *belongsTo(X,Y)* and a body of the rule is constructed by applying expansion operators described in " Fast rule mining in ontological knowledge bases with amie++" apart from the "*add closing atom operator*" operator.

The learned rules can then be pruned on various rule measures, such as confidence, coverage or weighted relative accuracy.

Selecting the rule 226 may comprise determining an amount of entities covered by the rule 226 that belong to the first cluster 216 and determining an amount of entities covered by the rule that belong to a second cluster 218. A measure for the rule 226 is determined depending on the amount of entities covered by the rule 226 that belong to the first cluster 216 and depending on the amount of entities that belong to the second cluster 218. The rule 226 is selected if the measure meets a condition. Otherwise the rule 226 is not selected.

Determining the measure may comprise determining a ratio of the amount of entities covered by the rule 226 that belong to the first cluster 216 and a cardinality of the first cluster 216.

Determining the measure may comprise determining a ratio of the amount of entities covered by the rule that belong to the second cluster 218 and a cardinality of the second cluster 218.

The third cluster 220 may be used alike to determine the measure.

In an example an exclusive coverage measure may be used to estimate the quality of the obtained cluster descriptions. The main advantage of this measure is that it accounts for *all* computed clusters when evaluating a given rule, which is in contrast to the majority of other rule measures that estimate the quality of a rule considered in isolation. This ensures that a given rule is exclusive for a cluster at hand, which contributes to its quality. For a given rule *r*, cluster *c*, collection of clusters *S* and a *KG* the exclusive coverage measure is defined as follows:

$$exc(r,c,\mathcal{S},KG) = \begin{cases} 0, & \text{if } \min_{c' \in \mathcal{S} \setminus c} \{cov(r,c,KG) - cov(r,c',KG)\} \leq 0 \\ cov(r,c,KG) - \dfrac{\sum_{c' \in \mathcal{S} \setminus c} cov(r,c',KG)}{|\mathcal{S} \setminus c|}, & \text{otherwise.} \end{cases}$$

Where *cov(r, c, KG)* is the standard coverage of a rule *r* for a cluster *c* and the knowledge graph *KG* defined as the ratio of entities covered by r within the cluster *c* over the cardinality of *c*.

Finally, among all computed cluster descriptions, those may be selected that have the highest average exclusive coverage.

The method may comprise determining an output depending on the rule 226 and detecting an input for the rule 226, in particular in response to the output. The method may comprise determining a label for the rule 226 depending on the input.

Rules can serve as explanations for clusters constructed over embeddings, and thus can be seen as assets that contribute to the explainability of machine learning models.

Rules represent human-interpretable labels for concepts, which are prominent sets of entities grouped based on their semantic similarity.

For example, assuming a KG is given that is extracted from scientific publications in the context of material science. Obviously, after such an extraction process many concepts, e.g. types of SOFC, might be missing, as they might not be directly mentioned in the text.

After applying the method described above on such a KG, one might obtain the cluster of entities with the rule 226 describing it as a set of "electrochemical conversion devices producing electricity directly from oxidizing a fuel, which have dimensions from needle-like shapes to lengths of about 1.5-2m for rapid start-up times and large gross power."

When material scientists are provided with such a description they can immediately realize that this label describes "tubular SOFC", and such concept can be added to the KG under the suggested name.

The rule 226 and the output in this example is "electrochemical conversion devices producing electricity directly from oxidizing a fuel, which have dimensions from needle-like shapes to lengths of about 1.5-2m for rapid start-up times and large gross power" or a representation thereof. The label for the rule 226 in this example may be "tubular SOFC".

The method and the rules in particular contribute to the process of semiautomatic ontology construction.

This enables creating new concepts, i.e. new rules. Adding the new concepts to the KG explicitly as described above can optimize a process of question answering.

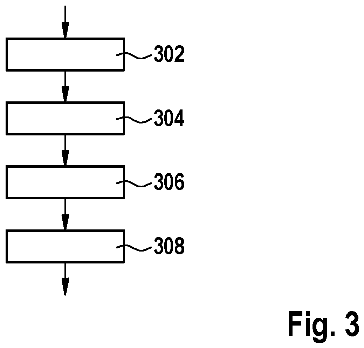

Aspects of an application are described below with reference to figure 3.

A corresponding method comprises a step 302 of receiving an input, in particular a query.

The query may be the question formulated by users in the natural language. The question may be translated into a formal representation.

The method comprises a step 304 of selecting the rule 226 depending on the input.

The task in this example is to find an answer to the question. The answer to the question is found, when at least one entity in the KG is found using a rule that corresponds to the concept. Since the questions are formulated by users in the natural language, they might often contain concepts, for which there is no rule.

In this case, the method comprises automatically detecting the rule 226 for the concept as described above.

The method comprises a step 306 of determining at least one entity depending on the rule 226.

The method comprises a step 308 of outputting a response depending on the at least one entity.

The rule 226 may be presented to the user as a description of the concept that was detected when the rule 226 was determined. The user can then better understand the response.

The query may concern a state of a machine, a property of an object in a digital image or an answer to a question.

Outputting the response may comprise indicating a state of a machine, a property of an object in a digital image or an answer to a question depending on the at least one entity.

In a production line having a plurality of machines that are adapted to communicate via messages, the input may be a message. The message may contain information regarding the state of the machine. The rule may in this case relate to a concept for failure recognition. The output may in this case state a sanity of a product that is produced with the line or a state of health of the machine or of another machine of the production line.

For digital image processing, the KG may be a description of objects recognized in an object recognition for the image. Entities in the KG may represent the objects and/or properties thereof.

In a street view, an object may be a car, a person, a house or other part of an infrastructure. In the street view, the property may describe the object and/or a relation of the object to another object in particular in the digital image.

**Claims**

1. Computer implemented method **characterized by** determining (1) an embedding (206) of a first entity (204), in particular of a knowledge graph (202), inserting (2) a first vertex (210) for the embedding (206) in an in particular weighted in particular undirected graph (208), determining (3) in the graph (208) a first cluster (216) of vertices comprising the first vertex (210), determining (4) for the first cluster (216) a second entity (222), in particular in the knowledge graph (202), determining (4) a semantic similarity (224) between the first entity (204) and the second entity (222), in particular in the knowledge graph (202), determining (5) a rule (226) for the first cluster (216) depending on a semantic similarity (224) between the first entity (204) and the second entity (222).

2. The method according to claim 1, **characterized in that** inserting (2) the first vertex (210) in the graph (208) comprises labelling an edge (212) of the graph that links the first vertex (210) to a second vertex (214) of the graph (208) with a label.

3. The method according to claim 2, **characterized in that** labelling (2) the edge (212) comprises determining a weight depending on a distance between a first vector for the first vertex (210) and a second vector for the second vertex (214) and mapping the weight to the label with a function.

4. The method according to one of the previous claims, **characterized in that** determining (3) the first cluster (216) comprises determining a subset of edges of the graph (208) for the first cluster (216) including the first vertex, (210) such that no cycle in the graph (208) intersects this subset once.

5. The method according to one of the previous claims, **characterized in that** determining (1) the embedding comprises mapping the first entity to a first vector in a vector space with a model.

6. The method according to one of the previous claims, **characterized in that** determining (5) the rule (226) comprises determining a plurality of rules depending on semantic similarities to the second entity and selecting the rule (226) from the plurality of rules.

7. The method according to claim 6, **characterized in that** selecting (5) the rule (226) comprises determining an amount of entities covered by the rule (226) that belong to the first cluster, determining an amount of entities covered by the rule (226) that belong to a second cluster, determining a measure for the rule (226) depending on the amount of entities covered by the rule (226) that belong to the first cluster and depending on the amount of entities that belong to the second cluster, and selecting the rule (226) if the measure meets a condition or not selecting the rule (226) otherwise.

8. The method according to claim 7, **characterized in that** determining (5) the measure comprises determining a ratio of the amount of entities covered by the rule (226) that belong to the first cluster and a cardinality of the first cluster.

9. The method according to claim 7 or 8, **characterized in that** determining (5) the measure comprises determining a ratio of the amount of entities covered by the rule (226) that belong to the second cluster and a cardinality of the second cluster.

10. The method according to one of the previous claims, **characterized by** determining an output depending on the rule (226), detecting an input for the rule (226), determining a label for the rule depending on the input.

11. The method according to one of the previous claims, **characterized by** receiving (302) an input, in particular a query or a message, selecting (304) the rule (226) depending on the input, determining (306) at least one entity depending on the rule (226), outputting (308) a response depending on the at least one entity.

12. The method according to claim 11, **characterized in that** outputting (308) the response comprises indicating a state of a machine, a property of an object in a digital image or an answer to a question depending on the at least one entity.

13. Device (100), **characterized in that** the device is adapted to execute the method according to one of the previous claims.

14. A computer program, **characterized in that** the computer program comprises computer readable instructions, that, when executed on a computer, cause the computer to execute steps in the method according to one of the claims 1 to 12.

100    102              104              106              108

Fig. 1

Fig. 2

EP 3 979 146 A1

302

304

306

308

Fig. 3

Europäisches
Patentamt

European
Patent Office

Office européen
des brevets

## EUROPEAN SEARCH REPORT

Application Number

EP 20 19 9308

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FAN CHENG ET AL: "A graph mining-based methodology for discovering and visualizing high-level knowledge for building energy management", APPLIED ENERGY, ELSEVIER SCIENCE PUBLISHERS, GB, vol. 251, 28 May 2019 (2019-05-28), XP085784397, ISSN: 0306-2619, DOI: 10.1016/J.APENERGY.2019.113395 [retrieved on 2019-05-28] * the whole document * | 1-14 | INV. G06N5/02 G06N20/00 |
| X | RAJMONDA CACERES ET AL: "A Boosting Approach to Learning Graph Representations", ARXIV.ORG, CORNELL UNIVERSITY LIBRARY, 201 OLIN LIBRARY CORNELL UNIVERSITY ITHACA, NY 14853, 14 January 2014 (2014-01-14), XP080001908, | 1,13,14 | |
| A | * the whole document * | 2-12 | TECHNICAL FIELDS SEARCHED (IPC) |
| X | VASSILIS CHRISTOPHIDES ET AL: "End-to-End Entity Resolution for Big Data: A Survey", ARXIV.ORG, CORNELL UNIVERSITY LIBRARY, 201 OLIN LIBRARY CORNELL UNIVERSITY ITHACA, NY 14853, 19 August 2020 (2020-08-19), XP081741172, | 1,13,14 | G06N |
| A | * the whole document * | 2-12 | |

-/--

The present search report has been drawn up for all claims

| Place of search | Date of completion of the search | Examiner |
|---|---|---|
| Munich | 18 March 2021 | Cyranka, Oliver |

EPO FORM 1503 03.82 (P04C01)

page 1 of 2

Europäisches
Patentamt

European
Patent Office

Office européen
des brevets

## EUROPEAN SEARCH REPORT

Application Number

EP 20 19 9308

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHN T RICKARD ET AL: "Hypercube Graph Representations and Fuzzy Measures of Graph Properties", IEEE TRANSACTIONS ON FUZZY SYSTEMS, IEEE SERVICE CENTER, PISCATAWAY, NJ, US, vol. 15, no. 6, 1 December 2007 (2007-12-01), pages 1278-1293, XP011195212, ISSN: 1063-6706, DOI: 10.1109/TFUZZ.2006.889754 | 1,13,14 | |
| A | * the whole document * ----- | 2-12 | |

TECHNICAL FIELDS
SEARCHED     (IPC)

The present search report has been drawn up for all claims

| Place of search | Date of completion of the search | Examiner |
|---|---|---|
| Munich | 18 March 2021 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. E. STEPP ; R. S. MICHALSKI.** Conceptual clustering of structured objects: A goal-oriented approach. *Artificial Intelligence,* 1986, vol. 28 (1), 43-69
- **CHOPRA, S. ; RAO, M.** The partition problem. *Math. Prog.,* 1993, vol. 59 (1-3), 87-115
- **KEUPER, M. ; LEVINKOV, E. ; BONNEEL, N. ; LAVOUE, G. ; BROX, T ; ANDRES, B.** Efficient decomposition of image and mesh graphs by lifted multicuts. *ICCV,* 2015
- **GALARRAGA, L. ; TEFLIOUDI, C. ; HOSE, K. ; SUCHANEK, F.M.** Fast rule mining in ontological knowledge bases with amie++. *The VLDB Journal,* 2015, vol. 24 (6), 707-730